# EUROPÄISCHE PATENTANMELDUNG

(11) **EP 4 588 738 A1**
(43) Veröffentlichungstag der Anmeldung: **23.07.2025**
(21) Anmeldenummer: 25150621.8
(22) Anmeldetag: 08.01.2025
(51) Int. Cl.: B60T 15/18

(54) **RELAISVENTIL FÜR EINE DRUCKLUFTANLAGE EINES FAHRZEUGS**

(30) Priorität: 22.01.2024 DE 102024101695
(71) Anmelder: KNORR-BREMSE Systeme für Nutzfahrzeuge GmbH, 80809 München (DE)
(72) Erfinder: DEEG, Markus, 71735 Eberdingen (DE); RÖTHER, Friedbert, 74389 Cleebronn (DE); GIANNUZZI, Michael, 74366 Kirchheim am Neckar (DE)

(57) **Zusammenfassung**

Die Erfindung offenbart ein Relaisventil (1) für eine Druckluftanlage eines Fahrzeugs, welches wenigstens Folgendes aufweist: ein Gehäuse (9) und an oder in dem Gehäuse (9) ausgebildet einen mit einer Druckluftquelle verbindbaren Druckmitteleingang, wenigstens einen mit einem Verbraucher verbindbaren Druckmittelausgang, wenigstens einen Steuereingang, wenigstens eine zur Atmosphäre führende Entlüftung, sowie wenigstens einen in dem Gehäuse (9) entlang einer Achse (10) geführten Relaisventilkolben (2), wobei der Relaisventilkolben (2) einen radial äußeren Rand (11) und eine zentrale Durchgangsöffnung (12) aufweist, in welche ein Führungsrohr (13) des Gehäuses (9) hineinragt, und wobei der Relaisventilkolben (2) mit dem radial äußeren Rand (11) an einer radial inneren Wandung (17) des Gehäuses (9) und mit einer radial inneren Umfangsfläche der zentralen Durchgangsöffnung (12) an einer radial äußeren Umfangsfläche (18) des Führungsrohrs (13) verschieblich geführt ist, und wobei eine Dichtungsanordnung (19) vorgesehen ist, durch welche der Relaisventilkolben (2) einerseits gegenüber der radial inneren Wandung (17) des Gehäuses (9) und andererseits gegenüber der radial äußeren Umfangsfläche (18) des Führungsrohrs (13) abgedichtet ist, wobei die Dichtungsanordnung (19) wenigstens ein Dichtungselement (21) mit einer ersten Dichtfläche (22) und einer zweiten, von der ersten Dichtfläche (21) wegweisenden Dichtfläche (23) umfasst, und wobei das Dichtungselement (21) ausgebildet ist, um den Relaisventilkolben (2) mit der ersten Dichtfläche (22) gegenüber der radial inneren Wandung (17) des Gehäuses (9) und mit der zweiten Dichtfläche (23) gegenüber der radial äußeren Umfangsfläche (18) des Führungsrohrs (13) abzudichten.

## Beschreibung

Die Erfindung betrifft ein Relaisventil für eine Druckluftanlage eines Fahrzeugs gemäß dem Oberbegriff von Anspruch 1 sowie ein elektropneumatisches Modul mit einem Relaisventil gemäß Anspruch 17, eine Druckluftanlage eines Fahrzeugs mit einem elektropneumatischen Modul gemäß Anspruch 18 sowie ein Fahrzeug mit einer Druckluftanlage gemäß Anspruch 19.

Ein gattungsgemäßes Relaisventil ist aus EP 1 844 999 A1 bekannt. Die dortige Dichtungsanordnung umfasst ein erstes Dichtelement, welches in einer Nut am radial äußeren Rand eines Ringteils des Relaisventilkolbens festgelegt ist und welches gegenüber einer radial inneren Wandung des Gehäuses dichtet, und ein zweites Dichtelement, welches in einer Ausnehmung an einem Führungsrohr des Gehäuses festgelegt ist und gegenüber einer radial äußeren Umfangsfläche des Führungsrohrs dichtet. Dabei weist das erste Dichtelement eine dynamische (bewegte) erste Dichtfläche auf, welche gegenüber der radial inneren Wandung des Gehäuses dichtet und eine statische zweite Dichtfläche, welche gegenüber der Nut im radial äußeren Rand dichtet. Ebenso weist das zweite Dichtelement eine dynamische (bewegte) dritte Dichtfläche auf, welche gegenüber der radial äußeren Wandung des Führungsrohrs dichtet und eine statische vierte Dichtfläche, welche gegenüber der Ausnehmung an der radial äußeren Umfangsfläche des Führungsrohrs dichtet. Dadurch ist die Anzahl der statischen und dynamischen Dichtstellen relativ hoch, es sind nämlich insgesamt wenigstens vier Dichtflächen notwendig, was auch einen relativ hohen Fertigungs- und Montageaufwand des Relaisventils mit sich bringt.

Der Erfindung liegt die Aufgabe zugrunde, ein Relaisventil zur Verfügung zu stellen, welches einfacher zu fertigen und montieren ist. Ebenso sollen ein elektropneumatisches Modul mit einem solchen Relaisventil, eine Druckluftanlage eines Fahrzeugs mit einem solchen elektropneumatischen Modul sowie ein Fahrzeug mit einer solchen Druckluftanlage zur Verfügung gestellt werden.

Diese Aufgabe wird durch die Merkmale der Ansprüche 1, 17, 18 und 19 gelöst.

### Offenbarung der Erfindung

Das Relaisventil gemäß der Erfindung ist ein luftmengenverstärkendes, pneumatisch gesteuertes Ventil und steuert mit kleinen Druckluftmengen große Druckluftmengen, beispielsweise für Bremszylinder einer Druckluftbremse eines Fahrzeugs. Hierfür weist das Relaisventil einen als Steuerkolben arbeitenden Relaisventilkolben auf, der auf der einen Seite über eine Steuerkammer mit Steuerdruck beaufschlagbar ist und auf der anderen Seite über eine Arbeitskammer und einen damit verbundenen Druckmittelausgang mit einem von einem Verbraucher bereitgestellten Arbeitsdruck beaufschlagbar ist. Zwischen einer über einen Druckmitteleingang mit einer Druckmittelquelle verbindbaren Belüftungskammer und der über den Druckmittelausgang mit dem Verbraucher verbindbaren Arbeitskammer ist ein Einlassventil eingeordnet. Zwischen der Arbeitskammer und einer zur Atmosphäre führenden Entlüftung ist ein Auslassventil eingeordnet.

Wird die Steuerkammer mit einem Steuerdruck beaufschlagt, bewegt sich der Relaisventilkolben in die Arbeitskammer hinein. Durch die Bewegung des Relaisventilkolbens wird erst das Auslassventil verschlossen und anschließend das Einlassventil geöffnet. Dadurch wird in der Arbeitskammer ein Druck aufgebaut, welcher an dem Relaisventilkolben dem Steuerdruck entgegenwirkt. Bei Vorliegen eines Gleichgewichts der gegeneinander wirkenden Drücke wird der Relaisventilkolben entgegen seiner ursprünglichen Bewegung zurückgeschoben. Es schließt sich das Einlassventil, ohne dass sich das Auslassventil öffnet, so dass der Druck in der Arbeitskammer und unter dem Druckmittelausgang erhalten bleibt. Bei einer Entlüftung der Steuerkammer wird der Relaisventilkolben weiter entgegengesetzt seiner ursprünglichen Bewegungsrichtung verschoben und das Auslassventil öffnet sich, bis der Druck in der Arbeitskammer auf einen Wert abgesunken ist, bei dem wieder Kräftegleichgewicht am Relaisventilkolben herrscht und das Auslassventil wieder geschlossen ist. Bei einer vollständigen Entlüftung der Steuerkammer werden auch die Arbeitskammer und somit auch die nachgeschalteten Verbraucher vollständig entlüftet. Das Relaisventil kann zusammen mit weiteren Komponenten in einer Ventileinrichtung integriert sein. Dabei kann die Ventileinrichtung beispielsweise eine elektronische Luftaufbereitungseinrichtung, ein elektropneumatisches Parkbremsmodul der ein elektropneumatisches Druckregelmodul sein.

Die Erfindung offenbart ein Relaisventil für eine Druckluftanlage eines Fahrzeugs, welches wenigstens Folgendes aufweist:
a) ein Gehäuse und an oder in dem Gehäuse ausgebildet einen mit einer Druckluftquelle verbindbaren Druckmitteleingang, wenigstens einen mit einem Verbraucher verbindbaren Druckmittelausgang, wenigstens einen Steuereingang, wenigstens eine zur Atmosphäre führende Entlüftung, sowie wenigstens einen in dem Gehäuse entlang einer Achse geführten Relaisventilkolben, wobei
b) der Relaisventilkolben einen radial äußeren Rand und eine zentrale Durchgangsöffnung aufweist, in welche ein Führungsrohr des Gehäuses hineinragt, und wobei
c) der Relaisventilkolben mit dem radial äußeren Rand an einer radial inneren Wandung des Gehäuses und mit einer radial inneren Umfangsfläche der zentralen Durchgangsöffnung an einer radial äußeren Umfangsfläche des Führungsrohrs verschieblich geführt ist, und wobei
d) eine Dichtungsanordnung vorgesehen ist, durch welche der Relaisventilkolben einerseits gegenüber der radial inneren Wandung des Gehäuses und andererseits gegenüber der radial äußeren Umfangsfläche des Führungsrohrs (insbesondere dynamisch) abgedichtet ist.

Die radial innere Wandung des Gehäuses umschließt beispielsweise in Umfangsrichtung gesehen das Führungsrohr sowie den Relaisventilkolben.

Das Relaisventil ist dadurch gekennzeichnet, dass
e) die Dichtungsanordnung wenigstens ein Dichtungselement, bevorzugt ein einziges Dichtungselement mit einer ersten Dichtfläche und einer zweiten, insbesondere in einer Richtung senkrecht zur Achse gesehen von der ersten Dichtfläche wegweisenden Dichtfläche umfasst, wobei das Dichtungselement ausgebildet ist, um den Relaisventilkolben mit der ersten Dichtfläche gegenüber der radial inneren Wandung des Gehäuses und mit der zweiten Dichtfläche gegenüber der radial äußeren Umfangsfläche des Führungsrohrs abzudichten.

Unter einem solchen Dichtungselement soll ein Dichtungselement verstanden werden, welches einerseits mit der erste und zweiten Dichtfläche eine Dichtfunktion ausübt, aber andererseits, wenn auch in beschränktem Umfang, eine Führungsfunktion zur Führung des Relaisventilkolbens an der radial inneren Wandung des Gehäuses und an der radial äußeren Umfangsfläche des Führungsrohrs des Gehäuses. Für eine Ausübung der Dichtfunktion und optional zusätzlich auch für die Führungsfunktion kann (können) die die erste Dichtfläche und/oder die zweite Dichtfläche wenigstens eine Dichtlippe aufweisen. Das wenigstens eine Dichtungselement kann daher bevorzugt als Lippendichtung ausgebildet sein.

Das Dichtungselement der Dichtungsanordnung stellt bevorzugt die einzige (insbesondere dynamische) Dichtung zwischen dem Relaisventilkolben einerseits und der radial äußeren Umfangsfläche des Führungsrohrs und der radial inneren Wandung des Gehäuses dar.

Dann ist das wenigstens eine, bevorzugt das einzige Dichtungselement der Dichtungsanordnung ausschließlich an dem Relaisventilkolben angeordnet oder festgelegt und insbesondere sämtliche Dichtflächen des Dichtungselements sind an dem Relaisventilkolben ausgebildet. Dann führt ein- und dasselbe und insbesondere einzige Dichtungselement der Dichtungsanordnung eine vorteilhafte Doppelfunktion aus, indem es die erste und gleichzeitig auch die zweite Dichtfunktion zur Verfügung stellt. Das Führungsrohr kann demgegenüber beispielsweise glattzylindrisch ausgebildet werden. Weiterhin sind insgesamt nur drei Dichtflächen notwendig, nämlich die oben erwähnten ersten und zweiten (dynamischen) Dichtflächen sowie eine dritte (statische) Dichtfläche, welche ausgebildet und vorgesehen ist, um eine Unterwanderung des Dichtelements durch Druckluft in Bezug auf den Relaisventilkolben zu verhindern. Insgesamt ergibt sich dadurch eine erhebliche Fertigungs- und Montagevereinfachung des Relaisventils. Unter einer dynamischen Dichtfläche soll daher eine Dichtfläche verstanden werden, welche relativ zu einem weiteren Element bewegt wird. Dies trifft hier für die erste Dichtfläche des Dichtungselements zu, welche insbesondere parallel zur Achse relativ zur radial inneren Wandung des Gehäuses bewegt wird und auch für die zweite Dichtfläche des Dichtungselements, welche insbesondere parallel zur Achse relativ zur radial äußeren Umfangsfläche des Führungsrohrs bewegt wird. Unter einer statischen Dichtfläche soll hingegen eine Dichtfläche verstanden werden, welche relativ zu dem Element, von dem es getragen wird, unbeweglich ist. Dies trifft hier für die dritte Dichtfläche zu, welche von dem Relaisventilkolben getragen wird und ausgebildet und vorgesehen ist, um eine Unterwanderung des Dichtelements durch Druckluft in Bezug auf den Relaisventilkolben zu verhindern.

Bevorzugt sind wenigstens die erste Dichtfläche und zweite Dichtfläche in Bezug zur Achse im Wesentlichen auf demselben Niveau angeordnet. Die Achse kann insbesondere eine zentrale Längsachse des Relaisventils darstellen.

Eine besonders gute Verbindung zwischen dem Relaisventilkolben und dem wenigstens einen Dichtungselement ergibt sich, wenn das wenigstens eine Dichtungselement mit dem Relaisventilkolben formschlüssig verbunden ist. Dann kann die Verbindung zwischen dem Relaisventilkolben und dem wenigstens einen Dichtungselement insbesondere ohne Haftvermittler ausgeführt sein.

Zur weiteren Vereinfachung der Herstellung und Montage des Relaisventils kann beitragen, wenn das Dichtungselement ein aus wenigstens einem Kunststoff und/oder wenigstens einem Elastomer hergestelltes Spritzgussformteil bilden, welches zumindest mit einem Abschnitt des Relaisventilkolbens spritzvergossen ist. Denn dann bildet das wenigstens eine Dichtungselement zusammen mit dem Relaisventilkolben eine einstückige Baueinheit aus, die in einem einzigen Montageschritt in dem Gehäuse montiert werden kann.

Das Dichtungselement als Spritzgussformteil kann im Querschnitt gesehen einschichtig aufgebaut sein, wobei es dann komplett in einem einzigen Spritzgussvorgang entstanden ist. Diese Variante hat den Vorteil einer schnellen und einfachen Herstellung des Dichtungselements.

Alternativ kann das wenigstens eine Dichtungselement als Spritzgussformteil im Querschnitt gesehen mehrschichtig aufgebaut sein, wobei jeweils eine Schicht der mehreren Schichten durch jeweils einen separaten Spritzgussvorgang entstanden ist. Der mehrschichtige Aufbau ermöglicht eine Verwendung verschiedener Materialien im Zuge der Herstellung des wenigstens einen Dichtungselements. Beispielsweise kann eine erste Schicht eine (feste) Trägerschicht aus einem ersten Material mit einem ersten E-Modul bilden, welcher beispielsweise größer ist als ein zweiter E-Modul einer zweiten Schicht aus einem zweiten Material, welche mit der ersten Dichtfläche beispielsweise in direktem Kontakt mit der radial inneren Umfangsfläche des Gehäuses und mit der zweiten Dichtfläche in direktem Kontakt mit der radial äußeren Umfangsfläche des Führungsrohrs steht.

Bevorzugt kann das kann das wenigstens eine Dichtungselement als Spritzgussformteil den oben erwähnten Abschnitt des Relaisventilkolbens wenigstens teilweise ein- oder umschließen, und/oder in wenigstens eine Öffnung des Abschnitts des Relaisventilkolbens hineinragen oder diese wenigstens eine Öffnung auch durchragen, d.h. durch diese Öffnung hindurchragen. Dabei kann wenigstens ein Öffnungsabschnitt der Öffnung parallel in Bezug auf die Achse sein. Auch sind Ausführungen möglich, in denen aufgrund einer Durchdringung einer oder mehrerer Öffnungen des Abschnitts des Relaisventilkolbens durch die wenigstens eine Dichtung im Querschnitt gesehen wenigstens eine Hinterschneidung zwischen dem Abschnitt des Relaisventilkolbens und dem wenigstens einen Dichtungselement vorhanden ist, die dann einen Formschluss des wenigstens einen Dichtungselements mit dem Abschnitt des Relaisventilkolbens ausbildet. Auch in diesem Fall kann auf einen Haftvermittler zwischen dem wenigstens einen Dichtungselement und dem Abschnitt des Relaisventilkolbens verzichtet werden.

Aber auch ohne eine solche Öffnung des Relaisventilkolbens kann eine Hinterschneidung bzw. ein Formschluss des wenigstens einen Dichtungselements mit dem Abschnitt des Relaisventilkolbens ausbildet sein, beispielsweise dadurch, dass wenigstens der Abschnitt des Relaisventilkolbens von dem wenigstens einen Dichtungselement umhüllt oder umspritzt ist.

Wie oben ausgeführt, kann das Dichtungselement eine dritte Dichtfläche aufweisen, welche ausgebildet und vorgesehen ist, um eine Unterwanderung des Dichtelements durch Druckluft im Bereich des Abschnitts des Relaisventilkolbens zu verhindern.

Besonders bevorzugt weist der Relaisventilkolben einen die zentrale innere Durchgangsöffnung aufweisenden Rohrteil und einen von dem Rohrteil nach radial außen weg ragenden Ringteil auf, an welchem radial außen der radial äußere Rand ausgebildet ist. Dabei kann bevorzugt der Ringteil den oben erwähnten Abschnitt des Relaisventilkolbens bilden. Auch umschließt die radial innere Wandung des Gehäuses in Umfangsrichtung gesehen den Ringteil und den Rohrteil des Relaisventilkolbens vorzugsweise.

Auch kann der Ringteil jeweils senkrecht zur Achse eine erste Stirnfläche und eine zweite Stirnfläche aufweisen, wobei das Dichtungselement wenigstens einen Teil der ersten Stirnfläche und/oder der zweiten Stirnfläche bedeckt. Auch dadurch kann eine Hinterschneidung zwischen dem Dichtungselement und dem Abschnitt des Relaisventilkolbens gebildet werden. Weiterhin kann dann das Dichtungselement auch eine elastische Anschlagfläche für den Relaisventilkolben gegenüber dem Gehäuse bilden, wenn der Relaisventilkolben mit der ersten Stirnfläche und/oder mit der zweiten Stirnfläche an einem Abschnitt des Gehäuses insbesondere in wenigstens einer Endlage anschlägt.

Auch kann der Rohrteil des Relaisventilkolbens hohl ausgeführt sein und einen Teil eines Entlüftungskanals bilden, welcher mit der Entlüftung des Relaisventils verbunden ist.

Besonders bevorzugt dichten die erste (dynamische) Dichtfläche und die zweite (dynamische) Dichtfläche eine mit dem Steuereingang verbundene Steuerkammer des Relaisventils gegenüber einer mit dem Druckmittelausgang verbundenen Arbeitskammer des Relaisventils, sowie die Steuerkammer des Relaisventils gegenüber der Entlüftungskammer des Relaisventils ab. Das Dichtungselement stellt bevorzugt die einzige (insbesondere dynamische) Dichtung zwischen der Steuerkammer, der Arbeitskammer und der Entlüftungskammer dar.

Wie oben bereits erwähnt, kann (können) die erste Dichtfläche und//oder die zweite Dichtfläche des Dichtungselements wenigstens eine Dichtlippe aufweisen, welche dann mit der radial inneren Umfangsfläche des Wandung des Gehäuses oder mit der radial äußeren Umfangsfläche des Führungsrohrs zusammenwirkt.

Die Dichtlippe ist relativ zu einer Ebene, die senkrecht zur Achse ist, bevorzugt in einem Spitzen Winkel angeordnet, damit eine Vorspannung gegenüber der zu dichtenden Fläche entsteht.

Eine verbesserte Dichtwirkung ergibt sich dann, wenn gemäß einer Weiterbildung dieser Ausführung wenigstens die erste Dichtfläche zwei in Richtung der Achse gesehen mit Abstand angeordnete Dichtlippen aufweist, wobei ein Zwischenraum zwischen den beiden Dichtlippen über einen internen Kanal des Relaisventilkolbens mit der Entlüftung verbunden ist. Der Hintergrund dieser Maßnahme besteht darin, dass, wie oben erwähnt die Dichtlippe schräg angestellt ist und für eine ausreichende Dichtwirkung eine gewisse Vorspannung gegen die zu dichtende Fläche benötigt, hier beispielsweise gegenüber der radial inneren Wandung des Gehäuses. Eine solche Vorspannung der Dichtlippe kann durch eine ausreichende Druckdifferenz zwischen der Steuerkammer und der Arbeitskammer erzeugt werden, die aber nur selten vorliegt. Indem nun der Zwischenraum zwischen den beiden Dichtlippen mit der Entlüftung und damit mit der Atmosphäre verbunden wird, entsteht zwischen dem Zwischenraum und der Arbeitskammer einerseits und der Steuerkammer andererseits eine Druckdifferenz, die ausreicht, um die beiden schräg angeordneten Dichtlippen gegen die radial innere Wandung des Gehäuses vorzuspannen und damit die Dichtwirkung zu erhöhen.

Die Erfindung stellt auch ein elektropneumatisches Modul einer Druckluftanlage eines Fahrzeugs zur Verfügung, welches wenigstens ein oben beschriebenes Relaisventil umfasst sowie auch eine Druckluftanlage eines Fahrzeugs, welche wenigstens ein solches elektropneumatisches Modul umfasst, wie auch ein Fahrzeug mit einer solchen Druckluftanlage.

### Zeichnung

Nachstehend sind Ausführungsbeispiele der Erfindung in der Zeichnung dargestellt und in der nachfolgenden Beschreibung näher erläutert. In der Zeichnung zeigt
- Fig. 1: eine Teilquerschnittsdarstellung eines Relaisventils gemäß der Erfindung in einer bevorzugten Ausführungsform;
- Fig. 2: einen vergrößerten Ausschnitt von Fig. 1;
- Fig. 3: eine Teilquerschnittsdarstellung eines Relaisventils gemäß der Erfindung in einer weiteren Ausführungsform.

### Beschreibung der Ausführungsbeispiele

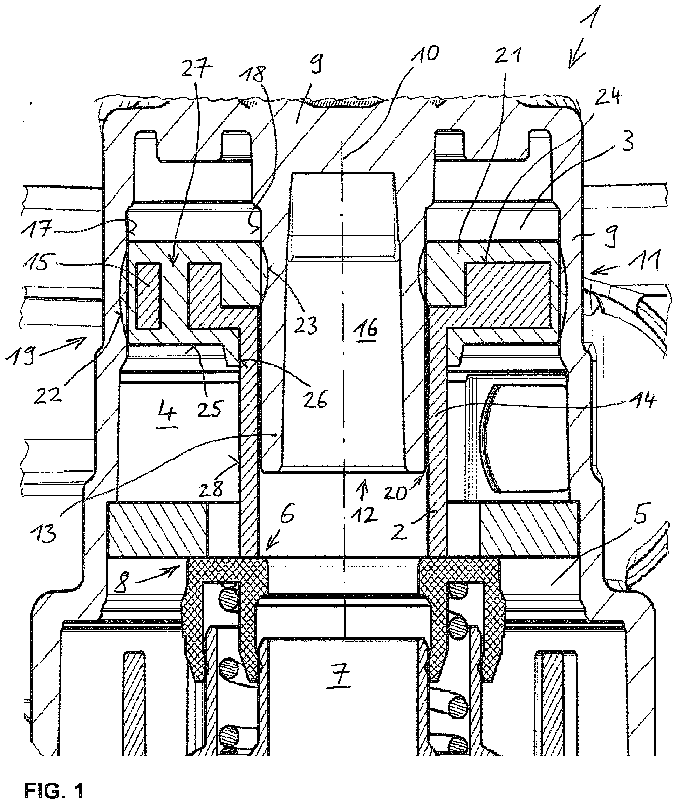

**Fig. 1** zeigt eine Teilquerschnittsdarstellung eines Relaisventils 1 gemäß der Erfindung in einer bevorzugten Ausführungsform. Das hier beispielsweise pneumatische Relaisventil 1 steuert mit kleinen Druckluftmengen große Druckluftmengen, hier beispielsweise für Bremszylinder einer Druckluftbremse eines Fahrzeugs. Hierfür weist das Relaisventil 1 einen als Steuerkolben arbeitenden Relaisventilkolben 2 auf, der auf der einen Seite eine Steuerkammer 3 begrenzt, die über einen hier nicht gezeigten Steueranschluss mit Steuerdruck beaufschlagbar ist, und auf der anderen Seite eine Arbeitskammer 4 begrenzt, die über einen hier nicht gezeigten Druckmittelausgang mit einem von einem Verbraucher bereitgestellten Arbeitsdruck beaufschlagbar ist. Zwischen einer über einen hier nicht gezeigten Druckmitteleingang mit einer Druckmittelquelle verbindbaren Belüftungskammer 5 und einer über den Druckmittelausgang mit dem Verbraucher verbindbaren Arbeitskammer 4 ist ein Einlassventil 6 eingeordnet. Zwischen der Arbeitskammer 4 und einer Entlüftungskammer 7, welche mit einer zur Atmosphäre führenden und hier nicht gezeigten Entlüftung verbunden ist, ist ein Auslassventil 8 eingeordnet. Das Einlassventil 6 und das Auslassventil 8 bilden zusammen ein von dem Relaisventilkolben 2 betätigbares Doppelsitzventil.

Wird die Steuerkammer 3 mit einem Steuerdruck beaufschlagt, bewegt sich der Relaisventilkolben 2 in die Arbeitskammer 4 hinein. Durch die Bewegung des Relaisventilkolbens 2 wird erst das Auslassventil 8 verschlossen und anschließend das Einlassventil 6 geöffnet. Dadurch wird in der Arbeitskammer 8 ein Druck aufgebaut, welcher an dem Relaisventilkolben 2 dem Steuerdruck entgegenwirkt. Bei Vorliegen eines Gleichgewichts der gegeneinander wirkenden Drücke wird der Relaisventilkolben 2 entgegen seiner ursprünglichen Bewegung zurückgeschoben. Es schließt sich das Einlassventil 6, ohne dass sich das Auslassventil 8 öffnet, so dass der Druck in der Arbeitskammer 4 und unter dem Druckmittelausgang erhalten bleibt.

Bei einer Entlüftung der Steuerkammer 3 wird der Relaisventilkolben 2 weiter entgegengesetzt seiner ursprünglichen Bewegungsrichtung verschoben und das Auslassventil 8 öffnet sich, bis der Druck in der Arbeitskammer 4 auf einen Wert abgesunken ist, bei dem wieder Kräftegleichgewicht am Relaisventilkolben 2 herrscht und das Auslassventil 8 wieder geschlossen ist. Bei einer vollständigen Entlüftung der Steuerkammer 3 werden auch die Arbeitskammer 4 und somit auch die nachgeschalteten Verbraucher, hier beispielsweise Bremszylinder vollständig entlüftet.

Im Einzelnen weist Relaisventil 1 Folgendes auf: Ein Gehäuse 9 und an oder in dem Gehäuse 9 ausgebildet den mit einer Druckluftquelle verbindbaren Druckmitteleingang, den mit dem Verbraucher verbindbaren Druckmittelausgang, den Steuereingang, die zur Atmosphäre führende Entlüftung, sowie den in dem Gehäuse entlang einer Achse 10 geführten Relaisventilkolben 2. Die Achse 10 kann wie hier insbesondere eine zentrale Längsachse des Relaisventils 1 darstellen.

Der Relaisventilkolben 2 weist einen radial äußeren Rand 11 und eine hier beispielsweise zentrale innere Durchgangsöffnung 12 auf, in welche ein Führungsrohr 13 des Gehäuses hineinragt, um den Relaisventilkolben 2 in Richtung der Achse 10 zu führen. Besonders bevorzugt weist der Relaisventilkolben 2 einen die Durchgangsöffnung 12 aufweisenden Rohrteil 14 und einen bevorzugt endseitig von dem Rohrteil 14 nach radial außen ragenden Ringteil 15 auf, an welchem ein radial äußerer Rand 11 ausgebildet ist. Der Rohrteil 14 des Relaisventilkolbens 2 ist bevorzugt hohl ausgeführt und bildet beispielsweise einen Teil eines hier beispielsweise zentralen Entlüftungskanals 16, welcher mit der Entlüftungskammer 7 des Relaisventils 1 verbunden ist.

Der Relaisventilkolben 2 ist mit dem radial äußeren Rand 11 an einer radial inneren Wandung 17 des Gehäuses 9 und mit einer radial inneren Umfangsfläche seiner radial inneren Durchgangsöffnung 12 an einer radial äußeren Umfangsfläche 18 des Führungsrohrs 13 verschieblich geführt. Weiterhin ist eine Dichtungsanordnung 19 vorgesehen, durch welche der radial äußere Rand des Ringteils 15 des Relaisventilkolbens 2 einerseits gegenüber der radial inneren Wandung 17 des Gehäuses 9 und andererseits gegenüber der radial äußeren Umfangsfläche 18 des Führungsrohrs 13 des Gehäuses 9 abgedichtet ist.

Die radial innere Wandung 17 des Gehäuses 9 umschließt in Umfangsrichtung gesehen das Führungsrohr 13, welches an seiner radial äußeren Umfangsfläche bevorzugt glattzylindrisch ausgebildet und führt mit dieser glattzylindrischen radial äußeren Umfangsfläche 18 den Relaisventilkolben 2. Zwischen der glattzylindrischen radial äußeren Umfangsfläche 18 des Führungsrohrs 13 und der ebenfalls bevorzugt glattzylindrischen radial inneren Umfangsfläche des Rohrteils 14 des Relaisventilkolbens 2 ist bevorzugt ein schmaler Ringspalt 20 ausgebildet, welcher mit der Entlüftungskammer 7 in Verbindung steht.

Die Dichtungsanordnung 19 umfasst hier beispielsweise ein einziges Dichtungselement 21 mit einer ersten Dichtfläche 22 und einer zweiten, insbesondere in einer Richtung senkrecht zur Achse 10 gesehen von der ersten Dichtfläche 22 wegweisenden Dichtfläche 23. Das Dichtungselement 21 ist hier mit dem Ringteil 15 des Relaisventilkolbens 2 verbunden und ausgebildet, um den Relaisventilkolben 2 mit der ersten Dichtfläche 22 gegenüber der radial inneren Wandung 17 des Gehäuses 9 und mit der zweiten Dichtfläche 23 gegenüber der radial äußeren Umfangsfläche 18 des Führungsrohrs 13 des Gehäuses 9 abzudichten.

Die erste Dichtfläche 22 und die zweite Dichtfläche 23 sind insbesondere dynamische Dichtflächen, weil die erste Dichtfläche 22 insbesondere parallel zur Achse 10 relativ zur radial inneren Wandung 17 des Gehäuses 9 und die zweite Dichtfläche 23 insbesondere parallel zur Achse 10 relativ zur radial äußeren Umfangsfläche 18 des Führungsrohrs 13 bewegt wird.

Besonders bevorzugt dichtet die erste (dynamische) Dichtfläche 22 die mit dem Steuereingang verbundene Steuerkammer 3 gegenüber der mit dem Druckmittelausgang verbundenen Arbeitskammer 4, und die zweite (dynamische) Dichtfläche 23 die Steuerkammer 3 gegenüber der mit der Entlüftung verbundenen Entlüftungskammer 7 ab.

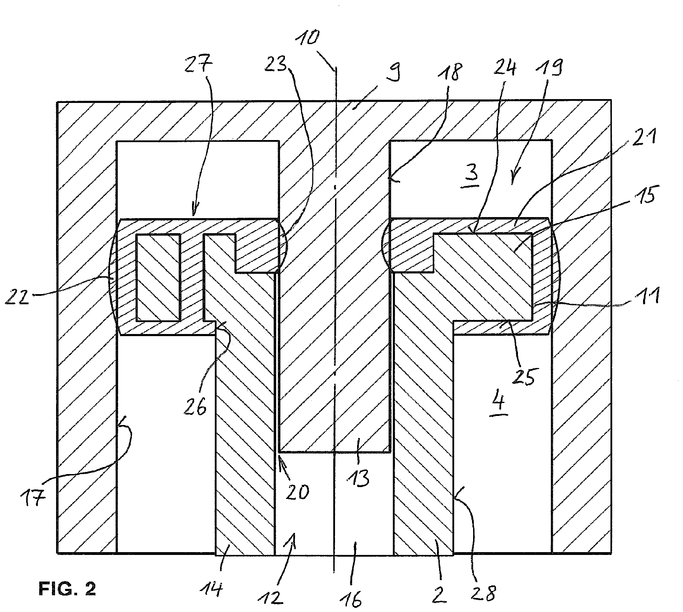

Der Ringteil 15 weist, jeweils senkrecht zur Achse 10 gesehen, eine erste, zur Steuerkammer 3 weisende Stirnfläche 24 und eine zweite, zur Arbeitskammer 4 weisende Stirnfläche 25 auf, wobei das Dichtungselement 21 beispielsweise wenigstens einen Teil der ersten Stirnfläche 24 und der zweiten Stirnfläche 25 bedeckt, wie insbesondere aus **Fig. 1** bis **Fig. 3** hervorgeht. Weiterhin ist bei dem Dichtungselement 21 eine dritte (statische) Dichtfläche 26 vorhanden, welche ausgebildet und vorgesehen ist, um eine Unterwanderung des Dichtungselements 21 durch Druckluft insbesondere durch Druckluft aus der Arbeitskammer 4 zu verhindern. Diese als dritte statische Dichtfläche 26 wird von dem Relaisventilkolben 2 getragen, steht aber bevorzugt in keinem Kontakt mit dem Gehäuse 9 und ist in Bezug zu dem Relaisventilkolben 2 unbeweglich. Bevorzugt sind die erste Dichtfläche 22, die zweite Dichtfläche 23 und die dritte Dichtfläche 26 an dem Ringteil 15 in Bezug zur Achse 10 im Wesentlichen auf demselben Niveau angeordnet.

Obwohl die erste Dichtfläche 22 und die zweite Dichtfläche 23 in **Fig. 1** bis **Fig. 3** aus zeichnerischen Gründen jeweils vereinfacht als Teilkreise dargestellt sind, können in der Realität dort jeweils beispielsweise von dem Dichtungselement 21 radial schräg wegragende Dichtlippen ausgebildet sein, wodurch das Dichtungselement 21 bevorzugt eine Lippendichtung darstellt. Radial schräg bedeutet im Querschnitt gesehen einen spitzen Winkel in Bezug zu einer Ebene, welche senkrecht zur Achse 10 angeordnet ist.

Das Dichtungselement 21 ist mit dem Ringteil 15 des Relaisventilkolbens 2 bevorzugt formschlüssig verbunden, insbesondere ist diese Verbindung ohne Haftvermittler ausgeführt. Das Dichtungselement 21 stellt hier beispielsweise ein aus einem Elastomer spritzgegossenes Spritzgussformteil dar, welches hier beispielsweise mit dem Ringteil 15 des Relaisventilkolbens 2 spritzvergossen ist. Denn dann bildet das Dichtungselement 21 zusammen mit dem Relaisventilkolben 2 eine einstückige Baueinheit aus, die in einem einzigen Montageschritt in dem Gehäuse 9 platziert und montiert werden kann.

Das Dichtungselement 21 als Spritzgussformteil ist hier im Querschnitt gesehen bevorzugt einschichtig aufgebaut, weil es beispielsweise in einem einzigen Spritzgussvorgang komplett hergestellt worden ist. Alternativ kann das Dichtungselement 21 als Spritzgussformteil im Querschnitt gesehen mehrschichtig aufgebaut sein, wobei jeweils eine Schicht der mehreren Schichten durch jeweils einen separaten Spritzgussvorgang entstanden ist. Der mehrschichtige Aufbau ermöglicht eine Verwendung verschiedener Materialien im Zuge der Herstellung des Dichtungselements 21.

Das Dichtungselement 21 umschließt als Spritzgussformteil den Ringteil 15 des Relaisventilkolbens 2 wenigstens teilweise (in Bezug auf die Achse 10 in radialer und in axialer Richtung) und durchragt hier beispielsweise eine Öffnung 27 des Ringteils 15 des Relaisventilkolbens 2, welche sich hier bevorzugt als Durchgangsöffnung zwischen der ersten Stirnfläche 24 und der zweiten Stirnfläche 25 erstreckt. Diese Öffnung 27 ist beispielsweise parallel in Bezug auf die Achse 10. Bei der hier gezeigten bevorzugten Ausführungsform können mehrere solche von dem Dichtungselement 21 durchdrungene Öffnungen 27 über den Umfang des Ringteils 15 verteilt angeordnet sein. Auch infolge dieser Durchdringungen entstehen im Querschnitt gesehen Hinterschneidungen zwischen dem Ringteil 15 des Relaisventilkolbens 2 und dem Dichtungselement 21, die dann einen Formschluss des Dichtungselements 21 mit dem Ringteil 15 des Relaisventilkolbens 2 ausbilden, wie insbesondere jeweils die linken Hälften von **Fig. 1** bis **Fig. 3** veranschaulichen.

Wie die jeweils rechte Hälfte von **Fig. 1** bis **Fig. 3** veranschaulichen kann der Querschnitt des Ringteils 15 auch (bevorzugt stellenweise in Umfangsrichtung) ohne eine solche Öffnung ausgeführt sein. Dennoch kann dann ein Formschluss des Dichtungselements 21 mit dem Ringteil 15 vorhanden sein, hier beispielsweise dadurch, dass der Ringteil 15 von dem Dichtungselement 21 wenigstens teilweise umhüllt oder umspritzt ist.

Wie oben ausgeführt, weist das Dichtungselement 21 darüber hinaus die dritte (statische) Dichtfläche 26 auf, welche ausgebildet und vorgesehen ist, um eine Unterwanderung des Dichtungselements 21 durch Druckluft im Bereich des Ringteils 15 zu verhindern. Hierzu kann die dritte (statische) Dichtfläche 26 beispielsweise gegen eine radial äußere Umfangsfläche 28 des Rohrteils 14 des Relaisventilkolbens 2 dichten.

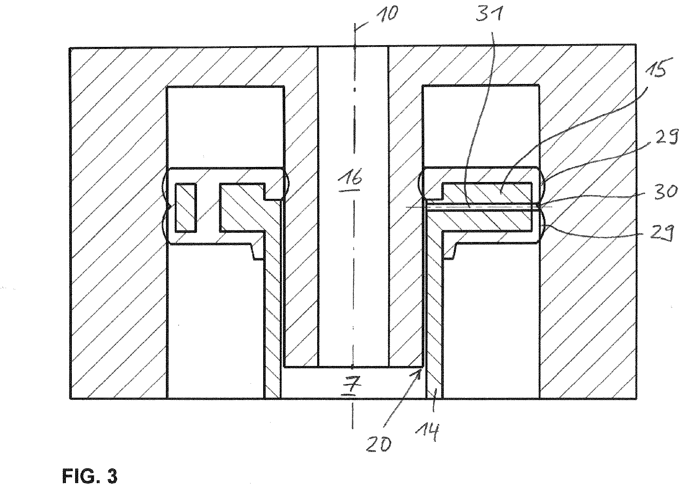

**Fig. 3** zeigt eine Teilquerschnittsdarstellung eines Relaisventils 1 gemäß der Erfindung in einer weiteren Ausführungsform. Bei dieser Ausführungsform weist beispielsweise die erste Dichtfläche 22 des Dichtungselements 21 zwei in Richtung der Achse 10 gesehen mit (Axial-)Abstand angeordnete Dichtlippen 29 auf, welche hier wiederum zeichnerisch vereinfacht als Teilkreise dargestellt sind. Ein Zwischenraum 30 zwischen den beiden Dichtlippen 29 ist über einen internen Kanal 31 des Ringteils 15 des Relaisventilkolbens 2, hier beispielsweise quer zur Achse verlaufend, mit der Entlüftungskammer 7 verbunden. Der Kanal 31 steht hierzu über den schmalen Ringspalt 20 zwischen der radial inneren Umfangsfläche des Rohrteils 15 und der radial äußeren Umfangsfläche 18 des Führungsrohrs 13 mit der Entlüftungskammer 7 in Verbindung. Durch diese Verbindung des Zwischenraums 30 zwischen den beiden Dichtlippen 29 mit der Entlüftungskammer 7 ergibt sich eine verbesserte Dichtwirkung, weil die schräg angeordneten Dichtlippen 29 durch die dadurch entstehende Druckdifferenz gegen die radial innere Wandung 17 vorgespannt werden, wie bereits einleitend beschrieben worden ist.

### Bezugszeichenliste

- 1: Relaisventil
- 2: Relaisventilkolben
- 3: Steuerkammer
- 4: Arbeitskammer
- 5: Belüftungskammer
- 6: Einlassventil
- 7: Entlüftungskammer
- 8: Auslassventil
- 9: Gehäuse
- 10: Achse
- 11: radial äußerer Rand
- 12: Durchgangsöffnung
- 13: Führungsrohr
- 14: Rohrteil
- 15: Ringteil
- 16: Entlüftungskanal
- 17: radial innere Wandung
- 18: radial äußere Umfangsfläche
- 19: Dichtungsanordnung
- 20: Ringspalt
- 21: Dichtungselement
- 22: erste Dichtfläche
- 23: zweite Dichtfläche
- 24: erste Stirnfläche
- 25: zweite Stirnfläche
- 26: dritte Dichtfläche
- 27: Öffnung
- 28: radial äußere Umfangsfläche
- 29: Dichtlippen
- 30: Zwischenraum
- 31: Interner Kanal

## Patentansprüche

1. Relaisventil (1) für eine Druckluftanlage eines Fahrzeugs, welches wenigstens Folgendes aufweist:
a) ein Gehäuse (9) und an oder in dem Gehäuse (9) ausgebildet einen mit einer Druckluftquelle verbindbaren Druckmitteleingang, wenigstens einen mit einem Verbraucher verbindbaren Druckmittelausgang, wenigstens einen Steuereingang, wenigstens eine zur Atmosphäre führende Entlüftung, sowie wenigstens einen in dem Gehäuse (9) entlang einer Achse (10) geführten Relaisventilkolben (2), wobei
b) der Relaisventilkolben (2) einen radial äußeren Rand (11) und eine zentrale Durchgangsöffnung (12) aufweist, in welche ein Führungsrohr (13) des Gehäuses (9) hineinragt, und wobei
c) der Relaisventilkolben (2) mit dem radial äußeren Rand (11) an einer radial inneren Wandung (17) des Gehäuses (9) und mit einer radial inneren Umfangsfläche der zentralen Durchgangsöffnung (12) an einer radial äußeren Umfangsfläche (18) des Führungsrohrs (13) verschieblich geführt ist, und wobei
d) eine Dichtungsanordnung (19) vorgesehen ist, durch welche der Relaisventilkolben (2) einerseits gegenüber der radial inneren Wandung (17) des Gehäuses (9) und andererseits gegenüber der radial äußeren Umfangsfläche (18) des Führungsrohrs (13) abgedichtet ist, **dadurch gekennzeichnet, dass**
e) die Dichtungsanordnung (19) wenigstens ein Dichtungselement (21) mit einer ersten Dichtfläche (22) und einer zweiten, von der ersten Dichtfläche (21) wegweisenden Dichtfläche (23) umfasst, wobei das Dichtungselement (21) ausgebildet ist, um den Relaisventilkolben (2) mit der ersten Dichtfläche (22) gegenüber der radial inneren Wandung (17) des Gehäuses (9) und mit der zweiten Dichtfläche (23) gegenüber der radial äußeren Umfangsfläche (18) des Führungsrohrs (13) abzudichten.

2. Relaisventil nach Anspruch 1, **dadurch gekennzeichnet, dass** das Dichtungselement (21) mit dem Relaisventilkolben (2) formschlüssig verbunden ist.

3. Relaisventil nach einem der vorhergehenden Ansprüche, **dadurch gekennzeichnet, dass** das Dichtungselement (21) ein aus wenigstens einem Kunststoff und/oder wenigstens einem Elastomer hergestelltes Spritzgussformteil bildet, welches zumindest mit einem Abschnitt (15) des Relaisventilkolbens (2) spritzvergossen ist.

4. Relaisventil nach Anspruch 3, **dadurch gekennzeichnet, dass** das das Dichtungselement (21) als Spritzgussformteil im Querschnitt gesehen
a) einschichtig aufgebaut ist, wobei es in einem einzigen Spritzgussvorgang komplett entstanden ist, oder
b) mehrschichtig aufgebaut ist, wobei jeweils eine Schicht der mehreren Schichten durch jeweils einen separaten Spritzgussvorgang entstanden ist.

5. Relaisventil nach Anspruch 3 oder 4, **dadurch gekennzeichnet, dass** das Spritzgussformteil
a) den Abschnitt (15) des Relaisventilkolbens (2) wenigstens teilweise ein- oder umschließt, und/oder
b) in wenigstens eine Öffnung (27) des Abschnitts (15) des Relaisventilkolbens (2) hineinragt oder diese wenigstens eine Öffnung (27) durchragt.

6. Relaisventil nach Anspruch 5, **dadurch gekennzeichnet, dass** wenigstens ein Öffnungsabschnitt der Öffnung (27) parallel in Bezug auf die Achse (10) ist.

7. Relaisventil nach einem der Ansprüche 3 bis 6, **dadurch gekennzeichnet, dass** das Dichtungselement (21) eine dritte Dichtfläche (26) aufweist, welche ausgebildet und vorgesehen ist, um eine Unterwanderung des Dichtungselements (21) durch Druckluft zu verhindern.

8. Relaisventil nach einem der Ansprüche 3 bis 7, **dadurch gekennzeichnet, dass** die Verbindung zwischen dem Dichtungselement (21) und dem Abschnitt (15) des Relaisventilkolbens (2) wenigstens eine Hinterschneidung aufweist.

9. Relaisventil nach einem der vorhergehenden Ansprüche, **dadurch gekennzeichnet, dass** der Relaisventilkolben (2) einen die zentrale Durchgangsöffnung (12) aufweisenden Rohrteil (14) und einen von dem Rohrteil (14) nach radial außen weg ragenden Ringteil (15) aufweist, an welchem radial außen der radial äußere Rand (11) ausgebildet ist.

10. Relaisventil nach einem der Ansprüche 3 bis 8 und nach Anspruch 9, **dadurch gekennzeichnet, dass** der Ringteil (15) den Abschnitt des Relaisventilkolbens (2) bildet.

11. Relaisventil nach Anspruch 10, **dadurch gekennzeichnet, dass** der Ringteil (15) jeweils senkrecht zur Achse (10) eine erste Stirnfläche (24) und eine zweite Stirnfläche (25) aufweist, wobei das Dichtungselement (21) wenigstens einen Teil der ersten Stirnfläche (24) und/oder der zweiten Stirnfläche (25) bedeckt oder umschließt.

12. Relaisventil nach Anspruch 11, **dadurch gekennzeichnet, dass** das Dichtungselement (21) eine elastische Anschlagfläche für den Relaisventilkolben (2) bildet, wenn der Relaisventilkolben (2) mit der ersten Stirnfläche (24) und/oder mit der zweiten Stirnfläche (25) in wenigstens einer Endlage an einem Abschnitt des Gehäuses (9) anschlägt.

13. Relaisventil nach einem der Ansprüche 9 bis 12, **dadurch gekennzeichnet, dass** der Rohrteil (14) des Relaisventilkolbens (2) hohl ausgeführt ist und einen Teil eines Entlüftungskanals (16) bildet, welcher mit der Entlüftung verbunden ist.

14. Relaisventil nach einem der vorhergehenden Ansprüche, **dadurch gekennzeichnet, dass** die erste Dichtfläche (22) und/oder die zweite Dichtfläche (23) des Dichtungselements (21) wenigstens eine Dichtlippe (29) aufweist (aufweisen).

15. Relaisventil nach Anspruch 14, **dadurch gekennzeichnet, dass** wenigstens die erste Dichtfläche (22) zwei in Richtung der Achse (10) gesehen mit Abstand angeordnete Dichtlippen (29) aufweist, wobei ein Zwischenraum (30) zwischen den beiden Dichtlippen (29) über einen internen Kanal (31) des Relaisventilkolbens (2) mit der Entlüftung verbunden ist.

16. Relaisventil nach einem der vorhergehenden Ansprüche, **dadurch gekennzeichnet, dass** die erste Dichtfläche (22) und die zweite Dichtfläche (23)
a) eine mit dem Steuereingang verbundene Steuerkammer (3) des Relaisventils (1) gegenüber einer mit dem Druckmittelausgang verbundenen Arbeitskammer (4) des Relaisventils (1), sowie
b) die Steuerkammer (3) des Relaisventils (1) gegenüber einer mit der Entlüftung des Relaisventils (1) verbundenen Entlüftungskammer (7) dichtet.

17. Elektropneumatisches Modul einer Druckluftanlage eines Fahrzeugs **dadurch gekennzeichnet, dass** es wenigstens ein Relaisventil (1) nach einem der vorhergehenden Ansprüche umfasst.

18. Druckluftanlage eines Fahrzeugs, **dadurch gekennzeichnet, dass** sie wenigstens ein elektropneumatisches Modul nach Anspruch 17 umfasst.

19. Fahrzeug mit einer Druckluftanlage nach Anspruch 18.
